# FASCICULE DE BREVET EUROPEEN

(11) **EP 4 393 051 B1**
(45) Date de publication et mention de la délivrance du brevet: **09.04.2025**
(21) Numéro de dépôt: 22760687.8
(22) Date de dépôt: 29.07.2022
(51) Int. Cl.: H02K 15/06

(54) **PROCÉDÉ ET ENSEMBLE D'ASSEMBLAGE D'ÉPINGLES CONDUCTRICES POUR UNE MACHINE ÉLECTRIQUE TOURNANTE**
VERFAHREN UND ANORDNUNG ZUR MONTAGE LEITFÄHIGER STIFTE FÜR EINE ELEKTRISCHE DREHMASCHINE
METHOD AND ASSEMBLY FOR ASSEMBLING CONDUCTIVE PINS FOR A ROTARY ELECTRIC MACHINE

(30) Priorité: 24.08.2021 FR 2108847
(43) Date de publication de la demande: 03.07.2024
(73) Titulaire: Valeo Electrification, 95800 Cergy (FR)
(72) Inventeur: DE CLERCQ, Stephane, 62630 Etaples-sur-Mer (FR); DUQUESNE, Jean, 62630 Etaples-sur-Mer (FR); TELES DE MENEZES, Humberto, 62630 Etaples-sur-Mer (FR); DARRAS, Ludovic, 62630 Etaples-sur-Mer (FR); GRESSIER, Samuel, 62630 Etaples-sur-Mer (FR); ACHIBANE, Hassna, 62630 Etaples-sur-Mer (FR); RAMET, Vincent, 62630 Etaples-sur-Mer (FR)
(74) Mandataire: Valeo Powertrain Systems
(86) Numéro de dépôt international: PCT/EP2022/071422
(87) Numéro de publication internationale: WO 2023/025519

(56) Documents cités:
- EP-B1- 3 179 603
- WO-A2-2018/039806
- US-A1- 2014 196 282

## Description

L'invention concerne notamment un procédé d'assemblage d'épingles conductrices dans un dispositif de transfert et un ensemble d'assemblage d'épingles conductrices permettant de mettre en œuvre ledit procédé.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique du véhicule tel qu'un véhicule automobile, ou lui fournir une assistance de couple.

Une pièce bobinée de machine électrique tournante est par exemple un stator comprenant un corps de pièce bobinée présentant une culasse formant une pièce de révolution autour d'un axe passant par le centre du stator. Le corps comporte des dents s'étendant radialement à partir de la culasse vers le centre du stator et autour desquelles est disposé un bobinage électrique. Plus particulièrement, les dents délimitent entre elles des encoches dans lesquelles passent des éléments conducteurs participant à former le bobinage du stator. Le bobinage est ici formé d'une pluralité d'épingles conductrices logées partiellement dans les encoches du corps et raccordées électriquement deux à deux via leurs extrémités pour former un chemin électrique continu. La plupart des épingles conductrices comprennent deux segments conducteurs sensiblement parallèles entre eux et reliés par une jonction coudée de manière à former un « U » décalé. Les segments conducteurs sont insérés respectivement, au niveau d'une première face d'extrémité axiale du stator, dans deux encoches distinctes de sorte que les jonctions coudées soient saillantes au niveau de la première face d'extrémité axiale du stator.

Cette forme des épingles en « U » décalé est classiquement obtenue par une première étape de pliage permettant d'obtenir une forme en « U » plat dans laquelle les deux segments conducteurs s'étendent dans un même plan, puis par une deuxième étape de vrillage dans laquelle les deux segments conducteurs sont décalés dans une direction circonférentielle l'un par rapport à l'autre. Cette étape de vrillage est classiquement faite lors d'une étape de vrillage global dans laquelle toutes les épingles conductrices sont vrillées en même temps pour obtenir le décalage de leurs segments conducteurs respectifs. Cette étape de vrillage global permet que positionner les épingles sur un cercle de diamètre correspondant à leur position finale dans le corps de pièce bobinée. Un outil tel qu'une pince permet ensuite de récupérer toutes les épingles mises dans l'outil de vrillage et de les insérer dans le corps de pièce bobinée. L'étape de vrillage global facilite l'opération de transfert des épingles depuis l'outils de vrillage vers le corps de pièce bobinée car une fois vrillées les épingles sont déjà disposées dans leur position finale correspondant au bon diamètre du stator, permettant leur insertion directe dans ledit corps. Cependant, cette étape de vrillage global ne permet pas un vrillage précis des épingles et peut engendrer des cassures dans l'émail recouvrant le cuivre formant les épingles conductrices ce qui peut provoquer des courts-circuits.

L'étape de vrillage peut alternativement être faite par une étape de vrillage unitaire dans laquelle chaque épingle est vrillée individuellement ce qui permet de mieux contrôler les dimensions finales des épingles et d'éviter les cassures de l'émail. De par leur forme en « U » et le décalage entre les segments conducteurs, il n'est pas possible, lors d'un procédé automatique, de positionner les épingles directement dans leur position finale pour leur insertion dans le corps de pièce bobinée. Par exemple, une méthode connue consiste à placer les épingles dans un outil présentant un diamètre largement supérieur au diamètre du corps de pièce bobinée pour ensuite avancer les épingles dans une direction radiale vers l'axe de l'outil jusqu'à ce que les épingles soient placées dans leur position finale pour insertion dans le corps de pièce bobinée. Une pince, telle que celles utilisée après un procédé de vrillage global, peut ensuite être utilisée pour transférer les épingles de cet outil vers le corps de pièce bobinée.

Cette méthode de positionnement des épingles par déplacement radial entre un grand et un petit diamètre peut ne pas être applicable dans certaines configurations de bobinage. En effet, dans certain cas, l'imbrication des épingles entre elles et/ou le nombre important de couches d'épingle conductrice peut complexifier cette méthode voire la rendre impossible. Le temps d'assemblage d'un tel bobinage est alors augmenté ce qui entraine également une augmentation du coût de fabrication.

WO 2018/039806 A2 et US 2014/196282 A1 décrivent des procédés d'assemblage d'épingles conductrices dans un dispositif de transfert, connus de l'état de la technique.

La présente invention vise à permettre d'éviter les inconvénients de l'art antérieur. A cet effet, la présente invention a pour objet un procédé d'assemblage d'épingles conductrices dans un dispositif de transfert, chaque épingle conductrice étant formée d'au moins un segment conducteur et étant destinée à être connectée électriquement à au moins une autre épingle conductrice pour former un bobinage électrique d'une pièce bobinée d'une machine électrique tournante, le dispositif de transfert comprenant un corps de broche présentant un axe et une pluralité de lamelles de guidage s'étendant radialement à partir du corps, des espaces latéraux destinés à loger au moins un segment conducteur étant définis entre deux lamelles de guidage adjacentes. Les épingles conductrices sont réparties en un premier ensemble d'épingles et un second ensemble d'épingles, le premier ensemble d'épingles étant divisé en un premier sous-ensemble d'épingles et un second sous-ensemble d'épingles. Selon l'invention, le procédé comprend, dans une première partie, au moins une étape d'alimentation comprenant l'agencement des épingles du premier ensemble d'épingles dans des espaces latéraux du dispositif de transfert ; et, dans une deuxième partie, : une étape de soulèvement dans laquelle les épingles du premier sous-ensemble sont déplacées de sorte à créer un espace d'insertion entre ledit premier sous-ensemble et le second sous-ensemble d'épingles ; une étape d'insertion dans laquelle les épingles du second ensemble sont insérées dans l'espace d'insertion de sorte à ce que les épingles conductrices du second ensemble soient alignées circonférentiellement avec les épingles conductrices du second sous-ensemble ; une étape d'abaissement dans laquelle les épingles du premier sous-ensemble sont déplacées de sorte à ce que lesdites épingles conductrices dudit premier sous-ensemble soient alignées circonférentiellement avec les épingles conductrices du second ensemble.

Grâce à la présente invention, les épingles du second ensemble peuvent être insérées de manière simple et automatique dans le dispositif de transfert alors que les épingles du premier ensemble sont déjà agencées dans ledit dispositif de transfert. Cela permet donc d'insérer des épingles dans des espaces latéraux comprenant déjà des épingles tout en les imbriquant les unes avec les autres. Un tel procédé d'assemblage peut être utilisé quel que soit la forme des épingles conductrices, le nombre de couche formé par lesdites épingles ou la structure d'imbrication desdites épingles les unes par rapport aux autres. Le procédé d'assemblage des épingles conductrices permet ainsi d'agencer les épingles conductrices, notamment vrillée unitairement, dans leur position finale les unes par rapport aux autres avant leur transfert dans le corps de pièce bobinée. Ledit procédé d'assemblage est simplifié et les risques de mauvais positionnement des épingles sont réduits. Le coût global du procédé d'assemblage est diminué.

Selon une réalisation, après l'étape d'abaissement, au moins un segment conducteur des épingles conductrices du second ensemble d'épingle est agencé radialement entre l'axe et un des segments conducteurs des épingles conductrices du premier sous-ensemble.

Selon une réalisation, après l'étape d'abaissement, les épingles conductrices du second ensemble d'épingles sont agencées circonférentiellement entre les épingles conductrices du premier sous-ensemble du premier ensemble d'épingles et les épingles conductrices du second sous-ensemble du premier ensemble d'épingles.

Selon une réalisation, lors de l'étape d'insertion, les épingles conductrices du second ensemble d'épingles sont insérées au moins dans une direction circonférentielle et/ou axiale entre les épingles conductrices du premier sous-ensemble d'épingles et les épingles conductrices du second sous-ensemble d'épingles.

Selon une réalisation, l'étape de soulèvement et/ou l'étape d'abaissement comprend un déplacement d'au moins un segment conducteur de chaque épingle du premier sous-ensemble dans une direction comprise dans un plan transversal à l'axe et/ou dans une direction comprise dans un plan contenant l'axe.

Selon une réalisation, le déplacement d'au moins un segment conducteur, lors de l'étape de soulèvement et/ou de l'étape d'abaissement, est un mouvement de basculement.

Selon une réalisation, le déplacement d'au moins un segment conducteur, lors de l'étape de soulèvement et/ou de l'étape d'abaissement, suit une direction courbe. Autrement dit, le déplacement est non rectiligne.

Selon une réalisation, le mouvement des épingles conductrices du premier sous-ensemble lors de l'étape d'abaissement et le mouvement desdites épingles conductrices lors de l'étape de soulèvement sont faits selon une même direction dans des sens opposés l'un par rapport à l'autre.

Selon une réalisation, le procédé comporte, après l'étape d'abaissement, une étape de retrait d'un support amovible agencé pour porter les épingles conductrices du second ensemble d'épingles lors de l'étape d'insertion. Le support amovible permet de simplifier l'étape d'insertion. Par exemple, le support amovible est formé par une plaque courbée. Alternativement, une pince ou un bras articulé peut être utilisé pour insérer lesdites épingles.

Selon une réalisation, le procédé comporte, après l'étape d'abaissement, une étape de retrait d'un support levier agencé pour porter les épingles conductrices du premier sous-ensemble d'épingles lors des étapes de soulèvement et d'abaissement. Par exemple, le support de levier est formé par une plaque courbée. Alternativement, une pince ou un bras articulé peut être utilisé pour déplacer lesdites épingles.

Selon une réalisation, le procédé comporte une étape d'expansion d'au moins une lamelle de guidage dans laquelle ladite lamelle se déplace entre une position de repos, dans laquelle un espace circonférentiel entre deux segments conducteurs est laissé libre, et une position de maintien, dans laquelle ladite lamelle est agencée circonférentiellement entre au moins deux segments conducteurs. Cette solution d'expansion des lamelles de guidage est une solution simple et peu encombrante pour maintenir les segments conducteurs des épingles conductrices après leur chargement dans le corps de broche tout en simplifiant l'étape d'insertion.

Selon une réalisation, lors de l'étape d'expansion, la lamelle de guidage présente un mouvement dans une direction radiale par rapport l'axe.

Selon une réalisation, les lamelles de guidage sont rétractables de sorte à pouvoir être logées, au moins partiellement et respectivement, dans des rainures correspondantes réalisées dans le corps de broche.

Selon une réalisation, le nombre d'espace latéral logeant les épingles du premier sous-ensemble d'épingles est supérieur ou égal au nombre d'espace latéral logeant les épingles du second ensemble d'épingles.

Selon une réalisation, le procédé d'assemblage présente, préalablement à la première partie, une étape de mise en forme dans laquelle les épingles conductrices sont vrillées pour décaler, dans une direction circonférentielle, leurs segments conducteurs respectifs l'un par rapport à l'autre. Par exemple, cette étape de mise en forme se fait de manière unitaire. On entend par manière unitaire que les épingles conductrices sont mises en forme individuellement les unes par rapport aux autres.

Selon une réalisation, la première partie du procédé d'assemblage comprend au moins une étape d'agencement dans un dispositif d'alimentation d'au moins un groupe d'épingle, chaque groupe d'épingle comportant au moins une épingle conductrice ; une pluralité d'étapes d'alimentation, chaque étape d'alimentation comprenant le transfert d'au moins un groupe d'épingle du dispositif d'alimentation vers un espace latéral du dispositif de transfert ; et une pluralité d'étapes de rotation, chaque étape de rotation séparant au moins deux étapes d'alimentation l'une de l'autre et comportant un mouvement de rotation du dispositif d'alimentation et/ou du dispositif de transfert de sorte à permettre une prochaine étape d'alimentation. Par exemple, les épingles du premier ensemble d'épingles sont agencées dans le dispositif de transfert via les étapes d'agencement, d'alimentation et de rotation.

Alternativement, les épingles du premier ensemble d'épingles peuvent être agencées manuellement dans le dispositif de transfert.

Selon une réalisation, la première partie du procédé d'assemblage s'arrête lorsque tous les espaces latéraux comprennent au moins un groupe d'épingle.

Selon une réalisation, au moins une épingle conductrice présente deux segments conducteurs connectés entre eux par une jonction coudée, lesdits segments conducteurs étant respectivement agencés à des distances différentes de l'axe et selon un angulaire différent. Autrement dit, les segments conducteurs d'une même épingle ne sont pas alignés radialement l'un avec l'autre. Les segments conducteurs sont donc agencés dans des espaces latéraux différents du dispositif de transfert.

La présente invention a également pour objet un ensemble d'assemblage d'épingles conductrices, chaque épingle conductrice étant formée d'au moins un segment conducteur et étant destinée à être connectée électriquement à au moins une autre épingle conductrice pour former un bobinage électrique d'une pièce bobinée d'une machine électrique tournante. Selon l'invention, l'ensemble d'assemblage comprend un dispositif de transfert comprenant un corps de broche et une pluralité de lamelles de guidage s'étendant radialement à partir du corps, des espaces latéraux destinés à loger au moins un segment conducteur étant définis entre deux lamelles de guidage adjacentes, le dispositif de transfert étant agencé pour mettre en œuvre le procédé d'assemblage tel que précédemment décrit.

Selon une réalisation, le dispositif de transfert comprend un support amovible agencé pour porter les épingles conductrices du second ensemble d'épingles lors de l'étape d'insertion.

Selon une réalisation, le dispositif de transfert comprend un support levier agencé pour porter les épingles conductrices du premier sous-ensemble d'épingles lors des étapes de soulèvement et d'abaissement.

Selon une réalisation, qu'au moins une lamelle de guidage est mobile entre une position de repos, dans laquelle un espace circonférentiel entre deux segments conducteurs est laissé libre, et une position de maintien, dans laquelle ladite lamelle est agencée circonférentiellement entre au moins deux segments conducteurs.

Selon une réalisation, le corps de broche présente une forme cylindrique.

Selon une réalisation, l'ensemble d'assemblage comporte, en outre, un support de maintien radial agencé pour maintenir les épingles conductrices dans le dispositif de transfert après leur étape d'alimentation respective dans les espaces latéraux. Par exemple, le support de maintien radial est agencé pour bloquer un mouvement radial, vers l'extérieur par rapport à l'axe du corps de broche, des segments conducteurs.

Selon une réalisation, l'ensemble comporte, en outre, un dispositif d'immobilisation d'au moins une épingle conductrice d'alimentation ou de connexion dans le corps de broche, ladite épingle conductrice d'alimentation ou de connexion présentant une hauteur, dans une direction axiale, différente d'une hauteur, dans une direction axiale, d'une épingle conductrice standard. Ce dispositif d'immobilisation permet d'effectuer le procédé d'assemblage décrit précédemment même lorsque le bobinage électrique à insérer présente différents types d'épingles conductrices. Cela permet de simplifier ledit procédé et de le standardiser quel que soit le type d'épingles conductrices utilisé.

La présente invention pourra être mieux comprise à la lecture de la description détaillée qui va suivre, d'exemples de mise en œuvre non limitatifs de l'invention et de l'examen des dessins annexés.
La [Fig. 1] représente, schématiquement et partiellement, une vue en coupe d'une machine électrique tournante selon un exemple de mise en œuvre de l'invention.
La [Fig. 2] représente schématiquement une vue en perspective du stator de la figure 1.
La [Fig. 3] représente schématiquement une vue en perspective d'un exemple d'épingle conductrice du stator de la figure 2.
La [Fig. 4] représente schématiquement une vue en coupe suivant un plan radial d'une partie du stator de la figure 2.
La [Fig. 5] représente schématiquement une vue en perspective d'un exemple de dispositif de transfert portant des épingles conductrices.
La [Fig. 6] représente schématiquement une vue en perspective d'un exemple d'ensemble d'assemblage comprenant le dispositif de transfert de la figure 5.
La [Fig. 7] représente schématiquement une vue en coupe du dispositif d'alimentation de la figure 6.
Les [Fig. 8], [Fig. 9], [Fig. 10], [Fig. 11], [Fig. 12], [Fig. 13], [Fig. 14] et [Fig. 15] représentent schématiquement et partiellement les différentes étapes du procédé d'assemblage.
La [Fig. 16] représente schématiquement une vue en perspective d'un exemple de support amovible.
La [Fig. 17] représente un logigramme d'un exemple de procédé d'assemblage.

Les éléments identiques, similaires ou analogues conservent les mêmes références d'une figure à l'autre. On notera également que les différentes figures ne sont pas nécessairement à la même échelle.

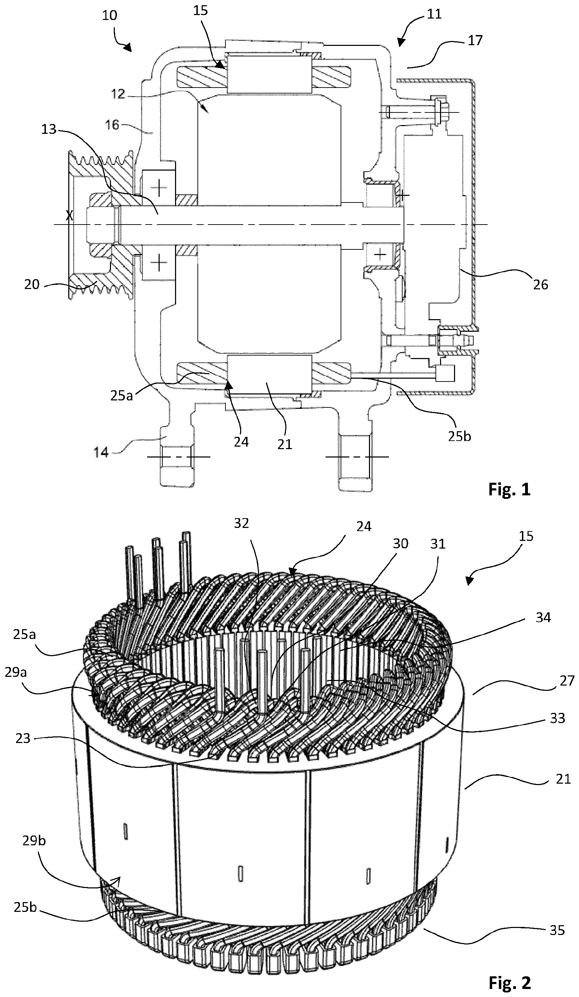

La figure 1 représente un exemple de machine électrique tournante 10 compacte et polyphasée, notamment pour véhicule tel qu'un véhicule automobile ou un drone. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11, notamment formé d'un premier flasque 16 et d'un second flasque 17, fixé au véhicule par des moyens de fixation 14. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe. Un organe d'entraînement 20 tel qu'une poulie ou un pignon peut être fixé sur une extrémité avant de l'arbre 13. Cet organe permet de transmettre le mouvement de rotation à l'arbre ou à l'arbre de transmettre son mouvement de rotation.

Dans l'exemple de réalisation décrit dans la suite de la description, la pièce bobinée correspond au stator 15 de la machine électrique tournante. Cependant on ne sortira pas du cadre de l'invention en utilisant un rotor comme pièce bobinée.

Dans cet exemple de réalisation, le stator 15 comporte un corps de pièce bobinée 21 formé d'un paquet de tôles doté d'encoches 22, équipées d'isolant d'encoche 23 pour le montage d'un bobinage électrique 24. Le bobinage traverse les encoches du corps 21 et forment un chignon avant 25a et un chignon arrière 25b de part et d'autre du corps de pièce bobinée. Par ailleurs, le bobinage 24 est formé d'une ou plusieurs phases comportant au moins un conducteur électrique et étant reliées électriquement à un ensemble électronique 26. L'ensemble électronique 26 qui est ici monté sur le boitier 11, comporte au moins un module électronique de puissance permettant de piloter au moins une phase du bobinage 24. Le module de puissance forme un convertisseur de tension formant notamment un pont redresseur de tension pour transformer la tension alternative générée en une tension continue et inversement. Alternativement, l'ensemble électronique pourrait être déporté de la machine.

La figure 2 représente plus en détail le stator 15. Le corps de pièce bobinée 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour de la culasse, avec des espaces successifs ménagés entre deux dents adjacentes de manière à définir les encoches 22. Selon la direction axiale, les encoches 22 sont ouvertes sur une première face d'extrémité axiale 29a et une seconde face d'extrémité axiale 29b du corps de pièce bobinée 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

Le bobinage 24 est formé à partir d'une pluralité d'épingles conductrices 18, chacune présentant au moins un segment conducteur 19, reliées électriquement entre elles pour former des chemins électriques formant les phases du bobinage. Dans l'exemple de la figure 2, chaque phase comprend une pluralité d'épingles conductrices 18 dont une pluralité de premières épingles standards 31, une pluralité de deuxièmes épingles standards 30, une épingle de connexion 32 et deux épingles d'alimentation 33, 34. Alternativement, chaque phase peut être formée différemment, ainsi on ne sortira pas du cadre de l'invention en changeant la composition du type d'épingle conductrice formant une phase, par exemple en enlevant l'épingle de connexion ou en ayant un nombre différent de type d'épingles standards.

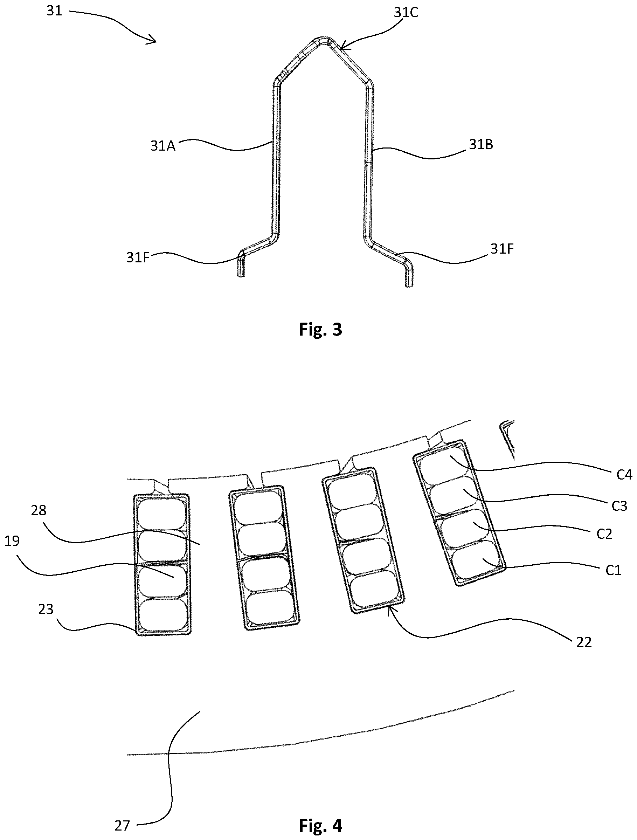

Comme illustré sur la figure 3, une épingle conductrice standard 30, 31 est formée de deux segments conducteurs 31A, 31B s'étendant axialement dans les encoches 22 et qui sont à cet effet sensiblement parallèle entre eux. Lesdits segments conducteurs sont connectés entre eux par l'intermédiaire d'une jonction coudée 31C qui est également conductrice de manière à former une continuité électrique. Les segments conducteurs 31A, 31B d'une même épingle 30, 31 sont disposés dans deux encoches distinctes l'une de l'autre. Les segments conducteurs sont connectés chacun à une autre épingle conductrice via leurs extrémités libres 31F respectives. Ces liaisons électriques entre les épingles conductrices sont par exemple faites par soudure. Les extrémités libres 31F et la jonction coudée 31C s'étendent axialement en dehors des encoches de sorte à former les chignons 25a, 25b. Les épingles d'alimentation 33, 34 sont chacune formées d'un unique segment conducteur s'étendant axialement dans les encoches 22. L'épingle de connexion 32 peut présenter une forme similaire aux épingles standards ou aux épingles d'alimentation. Au moins une épingle d'alimentation 33, 34 ou au moins une épingle de connexion 32 peut présenter une hauteur, dans une direction axiale, différente d'une hauteur d'une épingle standard 30, 31.

Comme visible sur la figure 4, les différents segments conducteurs 19 disposés dans une même encoche 22 sont superposés afin de former un empilement de N couches Ci, étant entendu que ces N couches sont présentes dans chacune des encoches de sorte que l'on forme sur le pourtour du stator des cercles annulaires sensiblement coaxiaux entre eux. Dans cet exemple de réalisation, ces couches sont au nombre de quatre et numérotées de C1 à C4, selon leur ordre d'empilement dans les encoches 22. La première couche C1 correspond à la couche externe, la deuxième couche C2 correspond à une couche centrale externe directement voisine de la première couche C1, la troisième couche C3 correspond à la couche centrale interne directement voisine de la deuxième couche C2 et la quatrième couche C4 correspond à la couche interne. La première couche C1 est ainsi occupée par le segment conducteur le plus proche de la culasse 27 et la couche C4 est ainsi occupée par le segment conducteur le plus proche de l'axe X. Bien entendu, l'invention ne se limite pas à ce seul mode de réalisation de sorte qu'un nombre supérieur ou inférieur de segments conducteurs peut être empilé dans chaque encoche par exemple 2, 6, 8 ou 10 conducteurs. Par exemple, une couche est formée par un unique segment conducteur. Ainsi, chaque encoche 22 comprend N segments conducteurs alignés radialement les uns par rapport aux autres sur une seule ligne et formant chacun une couche Ci. Dans l'exemple illustré, les segments conducteurs présentent chacun une section sensiblement rectangulaire facilitant leur empilement dans l'encoche.

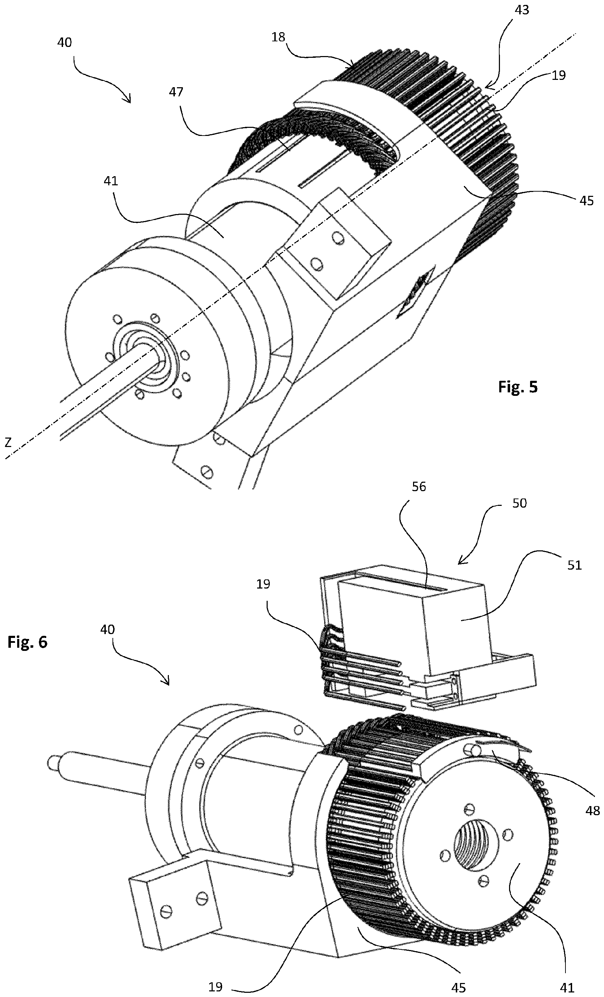

Il va maintenant être décrit en référence aux figures 5 à 17, un procédé d'assemblage 120, réalisé au moyen d'un ensemble d'assemblage, des épingles conductrices 18 permettant de charger lesdites épingles dans un dispositif de transfert 40. Ce dispositif de transfert permettra par la suite d'insérer directement les épingles conductrices dans les encoches 22 du corps de pièce bobinée 21 afin de former la pièce bobinée de machine électrique tournante.

La figure 5 représente un exemple de dispositif de transfert 40 dans lequel sont agencées les épingles conductrices 18 à la fin du procédé d'assemblage 120 et avant leur transfert dans le corps de pièce bobinée 21. Le dispositif de transfert 40 comprend un corps de broche 41 s'étendant de manière globalement cylindrique autour d'un axe Z et une pluralité de lamelles de guidage 42 s'étendant radialement à partir du corps de broche 41. Deux lamelles de guidage adjacentes définissent un espace latéral 43 dans lequel peut être logé au moins un segment conducteur 19 d'une épingle conductrice, et notamment plusieurs segments conducteurs. A la fin du procédé d'assemblage 120, les épingles conductrices 18 sont agencées dans le corps de broche 41 de sorte à ce que les segments conducteurs 19 soient logés au moins partiellement dans les espaces latéraux 43. Plus précisément dans cet exemple, les segments conducteurs 19 sont logés dans les espaces latéraux 43 de sorte à ce que chaque extrémité libre dépasse axialement de l'espace latéral. Autrement dit, chaque lamelle de guidage 42 présente une hauteur dans une direction axiale inférieure à une hauteur axiale des segments conducteurs 19. Alternativement, chaque lamelle de guidage peut présenter une hauteur dans une direction axiale égale ou supérieure à une hauteur des segments conducteurs 19.

Lors de ce procédé d'assemblage 120, les épingles conductrices 18 présentent une forme intermédiaire, c'est-à-dire qu'elles présentent une forme qui n'est pas la forme finale des épingles conductrices pour former le bobinage électrique 24. Lors du procédé d'assemblage, chaque épingle 18 a subi une étape préalable de mise en forme dans laquelle une jonction coudée 18C est formée, notamment par une première phase de pliage puis une seconde phase de vrillage permettant de décaler les segments conducteurs 19 d'une même épingle conductrice. La phase de vrillage est de préférence une phase de vrillage unitaire faite individuellement pour chaque épingle conductrice 18. Lors dudit procédé, les segments conducteurs 19 s'étendent axialement jusqu'à leur extrémité libre.

Le procédé d'assemblage 120 comprend une première étape d'agencement 121 dans laquelle les épingles conductrices 18 sont agencées dans un dispositif d'alimentation 50. L'étape d'agencement 121 comporte une première phase d'approvisionnement 121 et une seconde phase de formation 125.L'étape d'agencement 121 peut être réalisée de manière manuelle, un opérateur mettant manuellement en position les épingles conductrices 18 une par une dans ledit dispositif 50. Alternativement, l'étape d'agencement 121 peut être réalisée de manière automatique. Par exemple, un robot tel qu'un bras mécanique articulé peut saisir les épingles dans un réservoir ou une gouttière et les charger dans ledit dispositif d'alimentation 50 lors de la phase d'approvisionnement 124.

Dans un premier mode de réalisation non illustré, le dispositif d'alimentation peut prendre la forme d'un robot tel qu'un bras mécanique articulé. Le robot peut alors réaliser la phase d'approvisionnement 124 en saisissant par un moyen de préhension, par exemple une pince, une première épingle conductrice 18 puis la phase de formation 125 en saisissant une seconde épingle conductrice 18 pour former un groupe 36 de deux épingles 18. Alternativement, le robot peut saisir une seule épingle conductrice 18 ou saisir directement un groupe d'épingle 36 déjà formé, l'étape d'agencement 121 ne comporte alors pas de phase de formation. Le robot peut également comporter plusieurs moyens de préhension de sorte à saisir plusieurs groupes d'épingle 36 en parallèle.

Dans ce premier mode de réalisation, l'étape d'alimentation 122 est alors réalisée par le même robot que celui utilisé lors de l'étape d'agencement 121. Lors de cette étape d'alimentation 122, le ou les groupes d'épingle 36 agencés dans le robot lors de l'étape d'agencement 121 sont directement insérés dans le ou les espaces latéraux 43 du dispositif de transfert 40, notamment dans une direction radiale par rapport à l'axe Z. Le procédé 120 comprend alors une étape de rotation 123 et deux nouvelles étapes d'agencement 121 et d'alimentation 122 afin de transférer le ou les groupes d'épingle suivant dans le ou les espaces latéraux 43 suivants.

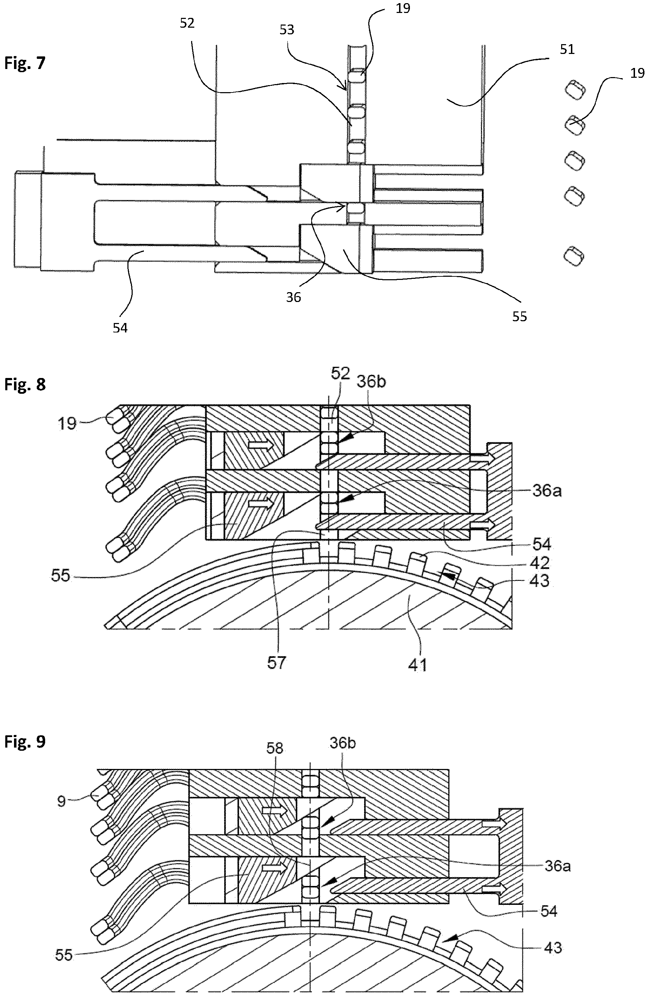

Dans un deuxième mode de réalisation illustré sur les figures 6 à 12, le dispositif d'alimentation 50 comporte un boitier 51 dans lequel s'étend un canal 52 définissant un logement 53 dans lequel sont agencés des segments conducteurs 19 d'une pluralité d'épingles conductrices 18. Dans l'exemple des figures 6 et 7, les épingles conductrices sont réparties en plusieurs groupes d'épingle 36 comprenant chacun une unique épingle conductrice 18. Dans l'exemple des figures 8 à 14, les épingles conductrices sont réparties en plusieurs groupes d'épingle 36 comprenant chacun deux épingles conductrices 18. Dans cet exemple, uniquement un segment conducteur 19 des épingles conductrices est inséré dans le canal 52. L'autre segment conducteur des épingles conductrices n'est, de préférence, pas inséré dans le boitier 51 et est laissé libre et non maintenu.

Le canal 52 s'étend dans la direction de transfert des épingles conductrices vers le dispositif de transfert 40. Dans cet exemple, ledit canal 52 s'étend radialement par rapport à l'axe Z. Le canal 52 est débouchant dans le boitier 51 de sorte à comprendre une portion d'alimentation 56 à travers laquelle les épingles conductrices 18 sont insérées dans ledit canal lors de la phase d'approvisionnement 124 et une portion d'extrémité 57 à travers laquelle les épingles conductrices 18 sont transférées depuis le canal vers le dispositif de transfert 40 lors de l'étape d'alimentation 122. Lesdites portions 56 et 57 étant opposée radialement par rapport à l'axe Z. Les groupes 36 s'étendent de manière superposée les uns par rapport aux autres dans le canal 52.

Le dispositif d'alimentation 50 comprend, ici, deux éléments de blocage 54 et deux éléments de séparation 55. Lesdits éléments peuvent chacun prendre la forme d'un bras. Alternativement, le dispositif d'alimentation 50 pourrait comprendre uniquement un élément de blocage 54 et un élément de séparation 55. Chaque élément de blocage 54 est mobile, en translation dans une direction sensiblement ortho-radiale, entre une position de blocage dans laquelle la portion d'extrémité 57 est obstruée et une position d'ouverture dans laquelle ladite portion 57 est ouverte. Chaque élément de séparation 55 est mobile, en translation dans une direction sensiblement ortho-radiale, entre une position de séparation dans laquelle une portion interne 58 du canal 52 est obstruée et une position de repos dans laquelle ladite portion interne 58 est ouverte. La portion interne s'étendant entre la portion d'alimentation 56 et la portion d'extrémité 57. Les mouvements des éléments de blocage 54 sont de préférence fait dans des directions opposées, et notamment de manière simultanée, aux mouvements des éléments de séparation 55.

Chaque élément 54, 55 est agencé dans une cavité formée dans le boitier 51. Dans cet exemple, l'élément de blocage 54 et l'élément de séparation 55 intervenant dans la même étape d'alimentation 122 sont agencés de manière alignée l'un avec l'autre de part et d'autre de la cavité 52, et notamment aligné dans une direction ortho-radiale. L'élément de séparation 55 présente une hauteur, dans une direction radiale par rapport à l'axe Z, supérieure à une hauteur dans ladite direction radiale de l'élément de blocage 54. De préférence, la hauteur de l'élément de séparation est au moins égale à la somme de la hauteur de l'élément de blocage avec une hauteur du groupe d'épingle 36.

Par exemple, chaque élément 54, 55 peut présenter une extrémité chanfreinée agencée pour accompagner le mouvement du groupe d'épingle correspondant. L"extrémité chanfreinée de l'élément de séparation 55 est agencée pour pousser le groupe d'épingle 36 dans le canal. La pente de l'extrémité chanfreinée de l'élément de séparation 55 est agencée de manière à faire face à la direction radiale interne par rapport à l'axe Z. La pente de l'extrémité chanfreinée de l'élément de blocage 54 est agencée de manière à faire face à la direction radiale externe par rapport à l'axe Z.

La phase de formation 125 peut être réalisée par le dispositif d'alimentation 50. Par exemple, l'élément de séparation 55 peut former les groupes d'épingle 36 en passant de sa position de repos à sa position de séparation. Alternativement, les groupes d'épingle peuvent être formés par un autre élément du dispositif d'alimentation tel qu'un bras de formation qui peut présenter une forme similaire à celle de l'élément de séparation 55. Toujours alternativement, les épingles peuvent être chargées dans le dispositif d'alimentation 50 lors de l'étape d'agencement 121 directement sous la forme de groupe d'épingle 36.

Le procédé d'assemblage 120 comprend une deuxième étape d'alimentation 122 décrite ici en référence au deuxième mode de réalisation. Dans l'étape d'alimentation 122, les groupes d'épingle 36 sont transférés depuis le canal 52 vers les espaces latéraux 43 du dispositif de transfert 40. L'étape d'alimentation 122 comprend une phase d'ouverture 127 de la portion d'extrémité 57 du canal et une phase de déplacement 128 d'un premier groupe d'épingle 36a dans une direction globalement radiale par rapport à l'axe Z et à travers la portion d'extrémité 57 jusqu'à atteindre un espace latéral 43 correspondant s'étendant en vis-à-vis du canal. La phase d'ouverture 127 est réalisée par un déplacement d'un des éléments de blocage 54 depuis sa position de blocage jusqu'à sa position d'ouverture. Le premier groupe d'épingle 36a peut alors entrer dans la phase de déplacement 128 dans laquelle ledit groupe présente un mouvement de translation de sorte à traverser la portion d'extrémité 57 du canal et à se loger dans l'espace latéral 43 en vis-à-vis de ladite portion 57. Le mouvement de translation est par exemple fait par gravité. On comprendra que les segments conducteurs 19 du groupe d'épingle 36a n'étant pas logés dans le canal 52 subissent également la phase de déplacement 128 pour venir se loger dans un espace latéral 43 correspondant.

Chaque étape d'alimentation comprend, ici, une phase de séparation 129 dans laquelle l'un des éléments de séparation 55 est déplacé depuis sa position de repos vers sa position de séparation de sorte à obstruer la portion interne 58. La phase d'ouverture 127 et la phase de séparation 129 sont ici faite de manière simultanée. Comme illustré, lors de chaque étape d'alimentation un unique groupe 36 est transféré du canal 52 vers le dispositif de transfert 40. Les figures 8, 9 et 10 illustrent la chronologie d'une étape d'alimentation.

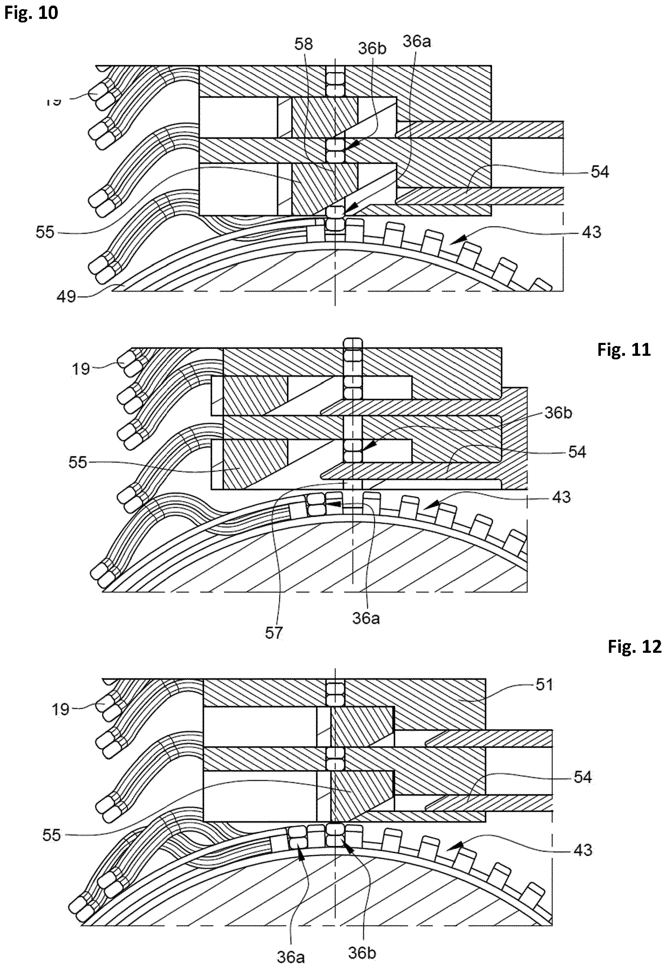

Comme visible sur le figure **11****,** l'étape d'alimentation 122 comprend une phase de chargement 126 séparant deux phases de déplacement 128. Dans la phase de chargement 126, un deuxième groupe d'épingle 36b est déplacé depuis une position de butée radiale contre un des éléments de séparation 55 vers une position de buté radiale contre un des éléments de blocage 54. Le deuxième groupe d'épingle 36b est alors prêt pour une succession de phase d'ouverture 127 et de déplacement 128 afin de le transférer vers le dispositif de transfert 40. La phase de chargement 126 comprend un déplacement de l'élément de blocage 54 de sa position d'ouverture à sa position de blocage de sorte à fermer la portion d'extrémité 57 du canal et un déplacement de l'élément de séparation 55 de sa position de séparation à sa position de repos de sorte à ouvrir la portion interne 58 du canal.

L'utilisation d'un deuxième élément de blocage 54 et d'un deuxième élément de séparation 55 permet ici de simplifier la séparation des groupes 36 préalablement à leur phase de chargement.

Dans cet exemple, une étape d'alimentation 122 comprend une phase de chargement 126, une phase d'ouverture 127, une phase de déplacement 128. Ladite étape 122 peut également comprendre une phase de séparation 129.

Comme visible sur le figure 11, les étapes d'alimentation sont séparées les unes des autres par une étape de rotation 123 dans laquelle le dispositif de transfert 40 présente un mouvement de rotation de sorte à ce que le canal 52 soit agencé en vis-à-vis de l'espace latéral 43 à remplir lors de la prochaine étape d'alimentation 122, dans l'exemple de ce deuxième mode de réalisation.

Comme visible sur la figure 12, une seconde étape d'alimentation 122 est ensuite réalisée avec le deuxième groupe d'épingle 36b. Les différentes étapes d'alimentation 122 et de rotation 123 sont ainsi répétées jusqu'à ce que tous les espaces latéraux 43 comprennent au moins un groupe d'épingle 36. La dernière étape d'alimentation correspond, ici, au remplissage d'un espace latéral adjacent à un espace latéral logeant le premier groupe d'épingle transféré lors de la première étape d'alimentation.

Dans ce mode de réalisation, l'étape d'agencement 121 peut être faite pendant les étapes d'alimentation 122 et de rotation 123 ou être faite en décalée avant ou entre lesdites étapes 122, 123.

Lorsqu'un groupe d'épingle 36 est transféré, lors de chaque étape d'alimentation 122, deux espaces latéraux accueillent respectivement des segments conducteurs 19 dudit groupe. Ainsi, lors des premières étapes d'alimentation, les deux espaces latéraux 43 accueillent leur premier groupe d'épingle alors que lors des dernières étape d'alimentation, un des espaces latéraux accueillent son premier groupe d'épingle et l'autre espace latéral accueille son deuxième groupe d'épingle, le deuxième groupe d'épingle venant se superposer, dans une direction radiale, au premier groupe d'épingle dudit espace latéral. Dans l'exemple illustré ici d'un bobinage à 4 conducteurs par encoches, chaque espace latéral 43 comporte deux groupes d'épingle 36 chacun formé de deux segments conducteurs 19.

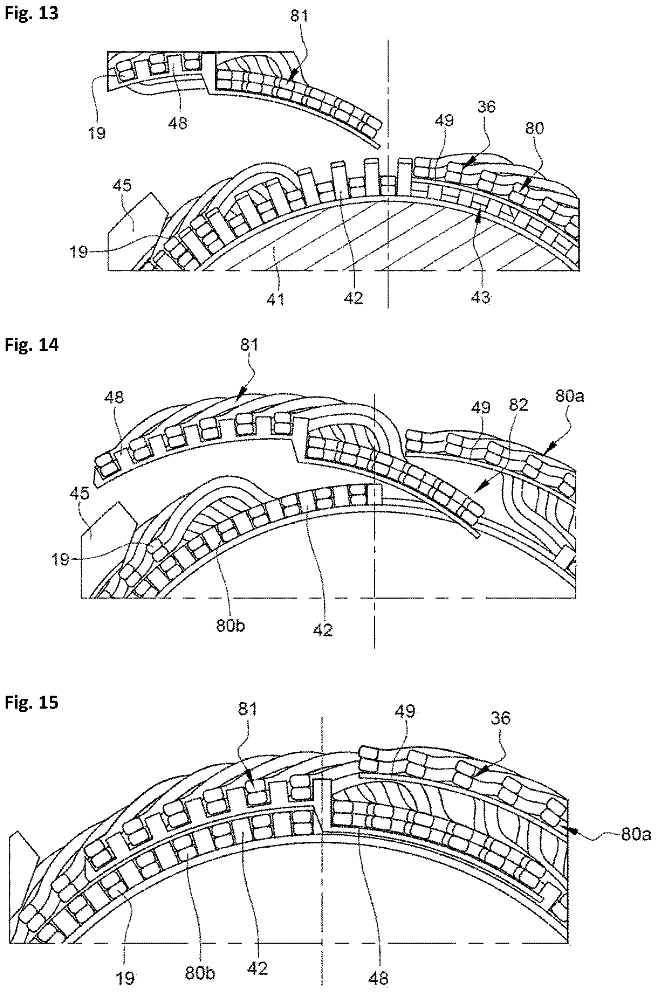

Comme visible sur la figure 13, à la fin de l'étape d'alimentation 122, certains espaces latéraux 43 comprennent leur nombre final d'épingles, correspondant à deux groupes d'épingle 36 dans cet exemple, et certain espaces latéraux 43 comprennent uniquement une partie de leur épingle, c'est-à-dire ici un seul groupe d'épingle 36. Le procédé d'assemblage 120 comprend une première partie A comprenant les étapes d'agencement 121, les étapes d'alimentation 122 et les étapes de rotation 123. Les épingles 18 insérées lors de cette première partie A forment un premier ensemble d'épingle 80.

Le procédé d'assemblage 120 comporte ensuite une deuxième partie B comprenant l'insertion d'un second ensemble d'épingle 81 pour compléter les espaces latéraux 43 ne comprenant pas tous leur groupe d'épingle. Un exemple de deuxième partie faite de manière automatique est décrit ci-dessous en référence aux figures 13 à 16.

La deuxième partie B du procédé d'assemblage 120 comporte une étape de soulèvement 130, visible sur la figure 14, dans laquelle une partie des épingles du premier ensemble 80, dite premier sous-ensemble d'épingles 80a, est déplacée de sorte à créer un espace d'insertion 82 entre ledit premier sous-ensemble et un second sous-ensemble d'épingles 80b. Le second sous-ensemble d'épingles 80b est formé des épingles du premier ensemble 80 ne faisant pas partie dudit premier sous-ensemble 80a. Par exemple, le déplacement du premier sous-ensemble d'épingles 80a est fait dans une direction comprise dans un plan transversal à l'axe Z. Le déplacement est par exemple un mouvement de soulèvement. Lors de l'étape de soulèvement 130, uniquement un des segments conducteurs 19 de chaque épingle conductrice 18 formant le premier sous-ensemble 80a est déplacé, le deuxième segment de chaque épingle 18 pouvant présenter un léger mouvement d'accompagnement due à la forme de l'épingle.

Le dispositif de transfert 40 peut comprendre un support levier 49 notamment formé par une plaque de forme courbée. Le support de levier 49 porte les épingles conductrices 18 du premier sous-ensemble d'épingles 80a lors de l'étape de soulèvement 130. Le support de levier présente ici un mouvement de basculement permettant de former l'espace d'insertion 82.

Le mouvement de basculement se fait notamment dans une direction de courbe. Dans l'exemple illustré ici, le mouvement est fait dans une direction comprise dans un plan transversal à l'axe Z. Autrement dit, le mouvement présente une composante radiale et une composante circonférentielle. Alternativement, le mouvement pourrait être fait dans une direction comprise dans un plan contenant l'axe Z. Autrement dit, le mouvement présente alors une composante axiale et une composante radiale. Toujours alternativement, le mouvement peut présenter des composantes axiale, radiale et circonférentielle.

Le procédé d'assemblage 120 comporte ensuite une étape d'insertion 131, visible sur la figure 14, dans laquelle le second ensemble d'épingles 81 est inséré dans l'espace d'insertion 82. L'insertion du second ensemble d'épingles 81 se fait dans une direction globalement radiale et circonférentielle par rapport à l'axe Z du dispositif de transfert 40.

A la fin de l'insertion, les épingles conductrices du second ensemble 81 sont alignées circonférentiellement avec les épingles conductrices du second sous-ensemble 80b et sont agencées circonférentiellement entre les épingles conductrices du premier sous-ensemble 80a et les épingles conductrices du second sous-ensemble 80b, comme visible sur la figure 15.

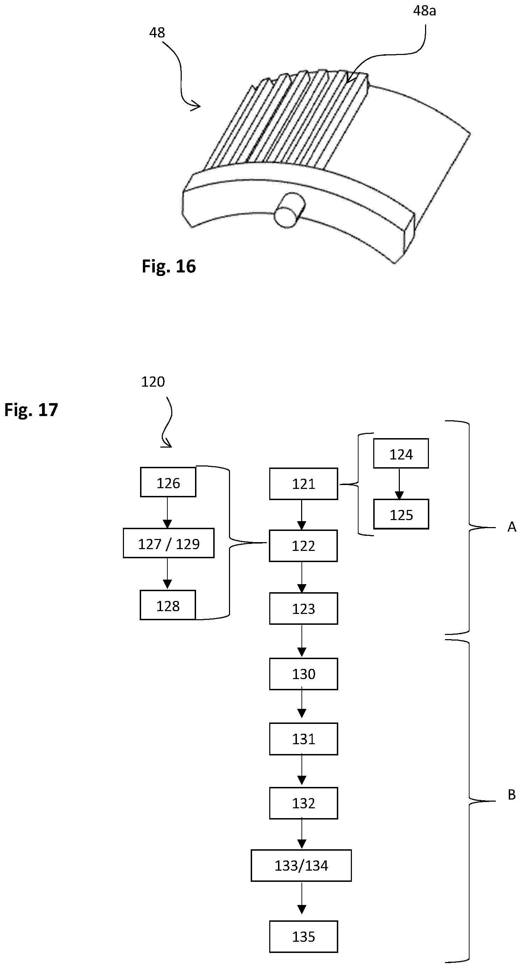

Le dispositif de transfert 40 peut comprendre un support amovible 48 agencé pour porter les épingles conductrices 18 du second ensemble d'épingles 81 lors de l'étape d'insertion 131. Un exemple de support amovible 48 est illustré sur la figure 16. Le support amovible 48 présente une forme de plaque courbée, notamment de manière à suivre la forme du corps de broche 41. Le support amovible présente une première portion 48a sur laquelle des rainures peuvent être formées de sorte à ce que chaque rainure maintienne au moins un segment conducteur 19.

Le procédé d'assemblage 120 comporte ensuite une étape d'abaissement 132 dans laquelle le support levier 49 portant le premier sous-ensemble d'épingles 80a est déplacé de sorte à ce que les épingles conductrices 18 du premier sous-ensemble 80a soient alignées circonférentiellement avec les épingles conductrices du second ensemble 81 et avec celles du second sous-ensemble 80b. Le support de levier présente ici un mouvement de basculement permettant de refermer l'espace d'insertion 82. Par exemple, le mouvement des épingles conductrices lors de l'étape d'abaissement 132 et le mouvement des épingles conductrices lors de l'étape de soulèvement 130 sont faits dans des directions opposées l'une par rapport à l'autre.

Après l'étape d'abaissement 132, les segments conducteurs des épingles conductrices du premier sous-ensemble 80a sont superposés à une partie des segments conducteurs des épingles conductrices du second ensemble 81, lesdits segments conducteurs du second ensemble 81 étant plus proche de l'axe Z. Ainsi, tous les espaces latéraux 43 logent le même nombre de groupe d'épingle 36. Après l'étape d'abaissement 132, les segments conducteurs des épingles conductrices du premier sous-ensemble 80a sont notamment revenus dans leur position initiale, c'est-à-dire avant l'étape de soulèvement 130.

Le procédé d'assemblage 120 peut comporter, après l'étape d'abaissement 125, une étape de retrait 133 du support amovible 48 et une étape de retrait 134 du support levier 49. Lesdites deux étapes de retrait 133, 134 pouvant être faite l'une après l'autre, dans un sens ou dans l'autre, ou de manière simultanée.

Le procédé d'assemblage 120 peut comporter, notamment après les étapes de retrait 133, 134, une étape d'expansion 135 d'au moins une lamelle de guidage 42 de sorte à ce que chaque segment conducteur 19 soit entouré circonférentiellement par deux lamelles de guidage. Par exemple, lors de l'étape d'insertion 131, les lamelles de guidage 42 destinée à définir les espaces latéraux 43 logeant des épingles conductrices du second ensemble d'épingles 81 peuvent être agencées dans une position de repos jusqu'aux étapes de retrait 133, 134. Ainsi, chaque lamelle de guidage 42 peut présenter différentes positions radiales par rapport au corps de broche 41. Par exemple, chaque lamelle de guidage peut présenter une position de maintien dans laquelle elle est agencée de sorte à s'étendre circonférentiellement entre au moins deux segments conducteurs 19 et une position de repos dans laquelle elle est logée dans une rainure formée dans le corps de broche 41 de sorte à laisser libre l'espace circonférentiel entre lesdits deux segments conducteurs. Dans la position de repos, la lamelle peut par exemple être totalement insérée dans le corps de broche de sorte à ne plus être en saillie radiale par rapport à une surface externe dudit corps. Dans cet exemple, chaque lamelle de guidage 42 peut également présenter une position intermédiaire dans laquelle elle maintien uniquement une partie des groupes d'épingle 36 de l'espace latéral 43 et dans cet exemple, uniquement un groupe 36. Chaque lamelle de guidage 42 peut présenter un mouvement radial depuis la position de repos vers la position de maintien en passant par la position intermédiaire.

Alternativement, les lamelles de guidage peuvent être rapportées au corps de broche de sorte à pouvoir être détachées du corps de broche, notamment lors de l'étape de d'insertion. Dans une autre alternative, les lamelles de guidage peuvent présenter un mouvement axial pour dégager l'espace d'insertion 82.

Le dispositif de transfert 40 peut comporter un support de maintien radial 45. Le support de maintien radial 45 est agencé pour maintenir, dans une direction radiale, les segments conducteurs 19 des épingles conductrices 18 dans les espaces latéraux 43. Le support de maintien est positionné autour de la circonférence extérieure du corps de broche 41 muni desdites épingles 18. Le support de maintien radial est notamment positionné après le transfert d'un segment conducteur 19 dans l'espace latéral 43 correspondant. Le support de maintien radial 45 est notamment positionné autour du corps de broche 41 muni des épingles conductrices 18 lors de l'étape de rotation 123. De préférence, le support de maintien 45 peut entourer totalement ledit corps 41. Le support de maintien 45 peut présenter plusieurs portions agencées de manière adjacente pour entourer ledit corps 41. Cela permet de simplifier le positionnement dudit support.

Le dispositif de transfert 40 peut comporter un dispositif d'immobilisation 47, visible sur la figure 5, permettant de maintenir au moins une épingle d'alimentation 33, 34 et/ou au moins une épingle de connexion 32 dans le corps de broche 41. Le dispositif d'immobilisation 47 permet notamment de maintenir lesdites épingles dans les directions radiale et axiale. Dans cet exemple de réalisation, le dispositif d'immobilisation 47 est formé d'une rainure dans laquelle est insérée une épingle d'alimentation 33, 34. L'épingle de connexion 32 est, ici, maintenue de la même manière que les épingles standards 30, 31 via les lamelles de guidage 42. Alternativement, le dispositif d'immobilisation 47 peut être formé par des murets entourant l'épingle à maintenir ou un système d'encliquetage. Les épingles d'alimentation 33, 34 et/ou de connexion 32 peuvent être chargées dans le dispositif de transfert 40 via le dispositif d'alimentation 50 en utilisant la première partie A et/ou la deuxième partie B du procédé d'assemblage 120 en fonction de leur position par rapport aux ensemble d'épingles 80, 81. Alternativement, I épingles d'alimentation 33, 34 et/ou de connexion 32 peuvent être chargées dans le dispositif de transfert 40 via autre dispositif d'alimentation spécifique à leur forme ou via le premier mode de réalisation décrit précédemment ou encore manuellement.

La présente invention trouve des applications en particulier dans le domaine des alternateurs, des alterno-démarreurs, des moteurs électriques ou des machines réversibles mais elle pourrait également s'appliquer à tout type de machine tournante. Bien entendu, la description qui précède a été donnée à titre d'exemple uniquement et ne limite pas le domaine de la présente invention dont on ne sortirait pas en remplaçant les différents éléments par tous autres équivalents. Par exemple, on ne sortira pas du cadre de l'invention en adaptant le procédé et l'ensemble d'assemblage décrit ci-dessus pour une machine électrique tournante dont le stator est positionné radialement à l'intérieur du rotor. En outre, on ne sortira pas du cadre de l'invention en utilisant plusieurs dispositif d'alimentation en parallèle.

## Revendications

1. **Procédé** d'assemblage d'épingles conductrices dans un dispositif de transfert, chaque épingle conductrice (18) étant formée d'au moins un segment conducteur (19) et étant destinée à être connectée électriquement à au moins une autre épingle conductrice pour former un bobinage électrique (24) d'une pièce bobinée d'une machine électrique tournante (10), le dispositif de transfert (40) comprenant un corps de broche (41) présentant un axe (Z) et une pluralité de lamelles de guidage (42) s'étendant radialement à partir du corps, des espaces latéraux (43) destinés à loger au moins un segment conducteur étant définis entre deux lamelles de guidage adjacentes, les épingles conductrices (18) sont réparties en un premier ensemble d'épingles (80) et un second ensemble d'épingles (81), le premier ensemble d'épingles (80) étant divisé en un premier sous-ensemble d'épingles (80a) et un second sous-ensemble d'épingles (80b), le procédé (120) étant **caractérisé en ce qu'**il comprend, dans une première partie (A), au moins une étape d'alimentation (122) comprenant l'agencement des épingles du premier ensemble d'épingles (80) dans des espaces latéraux (43) du dispositif de transfert (40) ; et, dans une deuxième partie (B), :
- une étape de soulèvement (130) dans laquelle les épingles du premier sous-ensemble (80a) sont déplacées de sorte à créer un espace d'insertion (82) entre ledit premier sous-ensemble (80a) et le second sous-ensemble d'épingles (80b) ;
- une étape d'insertion (131) dans laquelle les épingles du second ensemble (81) sont insérées dans l'espace d'insertion (82) de sorte à ce que les épingles conductrices du second ensemble (81) soient alignées circonférentiellement avec les épingles conductrices du second sous-ensemble (80b) ;
- une étape d'abaissement (132) dans laquelle les épingles du premier sous-ensemble (80a) sont déplacées de sorte à ce que lesdites épingles conductrices dudit premier sous-ensemble soient alignées circonférentiellement avec les épingles conductrices du second ensemble (81).

2. Procédé d'assemblage selon la revendication précédente, dans lequel, après l'étape d'abaissement (132), au moins un segment conducteur des épingles conductrices du second ensemble d'épingle (81) est agencé radialement entre l'axe (Z) et un des segments conducteurs des épingles conductrices du premier sous-ensemble (80a).

3. Procédé d'assemblage selon l'une des revendications précédentes, dans lequel, après l'étape d'abaissement (132), les épingles conductrices du second ensemble d'épingles (82) sont agencées circonférentiellement entre les épingles conductrices du premier sous-ensemble (80a) du premier ensemble d'épingles et les épingles conductrices du second sous-ensemble (80b) du premier ensemble d'épingles.

4. Procédé d'assemblage selon l'une des revendications précédentes, dans lequel, lors de l'étape d'insertion (131), les épingles conductrices du second ensemble d'épingles (81) sont insérées au moins dans une direction circonférentielle et/ou axiale entre les épingles conductrices du premier sous-ensemble (80a) d'épingles et les épingles conductrices du second sous-ensemble (80b) d'épingles.

5. Procédé d'assemblage selon l'une des revendications précédentes, dans lequel l'étape de soulèvement (130) et/ou l'étape d'abaissement (132) comprend un déplacement d'au moins un segment conducteur (19) de chaque épingle (18) du premier sous-ensemble (80a) dans une direction comprise dans un plan transversal à l'axe (Z) et/ou dans une direction comprise dans un plan contenant l'axe (Z).

6. Procédé d'assemblage selon l'une des revendications précédentes, dans lequel le mouvement des épingles conductrices du premier sous-ensemble (80a) lors de l'étape d'abaissement (132) et le mouvement desdites épingles conductrices (80a) lors de l'étape de soulèvement (130) sont faits selon une même direction dans des sens opposés l'un par rapport à l'autre.

7. Procédé d'assemblage selon l'une des revendications précédentes, dans lequel le procédé (120) comporte, après l'étape d'abaissement (132), une étape de retrait (133) d'un support amovible (48) agencé pour porter les épingles conductrices du second ensemble d'épingles (81) lors de l'étape d'insertion (131).

8. Procédé d'assemblage selon l'une des revendications précédentes, dans lequel le procédé (120) comporte, après l'étape d'abaissement (132), une étape de retrait (134) d'un support levier (49) agencé pour porter les épingles conductrices du premier sous-ensemble d'épingles (80a) lors des étapes de soulèvement (130) et d'abaissement (132).

9. Procédé d'assemblage selon l'une des revendications précédentes, dans lequel le procédé (120) comporte une étape d'expansion (135) d'au moins une lamelle de guidage (42) dans laquelle ladite lamelle se déplace entre une position de repos, dans laquelle un espace circonférentiel entre deux segments conducteurs (19) est laissé libre, et une position de maintien, dans laquelle ladite lamelle (42) est agencée circonférentiellement entre au moins deux segments conducteurs (19).

10. Procédé d'assemblage selon la revendication précédente, dans lequel, lors de l'étape d'expansion (135), la lamelle de guidage (42) présente un mouvement dans une direction radiale par rapport l'axe (Z).

11. Procédé d'assemblage selon l'une des revendications précédentes, dans lequel le nombre d'espace latéral (43) logeant les épingles (18) du premier sous-ensemble d'épingles (80a) est supérieur ou égal au nombre d'espace latéral (43) logeant les épingles (18) du second ensemble d'épingles (81).

12. Ensemble d'assemblage d'épingles conductrices, chaque épingle conductrice (18) étant formée d'au moins un segment conducteur (19) et étant destinée à être connectée électriquement à au moins une autre épingle conductrice pour former un bobinage électrique (24) d'une pièce bobinée d'une machine électrique tournante, l'ensemble d'assemblage étant **caractérisé en ce qu'**il comprend un dispositif de transfert (40) comprenant un corps de broche (41) et une pluralité de lamelles de guidage (42) s'étendant radialement à partir du corps, des espaces latéraux (43) destinés à loger au moins un segment conducteur (19) étant définis entre deux lamelles de guidage adjacentes ; le dispositif de transfert (40) étant agencé pour mettre en œuvre le procédé d'assemblage selon l'une quelconque des revendications précédentes.

13. Ensemble d'assemblage selon la revendication 12, dans lequel le dispositif de transfert (40) comprend un support amovible (48) agencé pour porter les épingles conductrices du second ensemble d'épingles (81) lors de l'étape d'insertion (131).

14. Ensemble d'assemblage selon la revendication 12 ou 13, dans lequel le dispositif de transfert (40) comprend un support levier (49) agencé pour porter les épingles conductrices du premier sous-ensemble d'épingles (80a) lors des étapes de soulèvement (123) et d'abaissement (125).

15. Ensemble d'assemblage selon l'une des revendications 12 à 14, dans lequel au moins une lamelle de guidage (42) est mobile entre une position de repos, dans laquelle un espace circonférentiel entre deux segments conducteurs (19) est laissé libre, et une position de maintien, dans laquelle ladite lamelle (42) est agencée circonférentiellement entre au moins deux segments conducteurs (19).

## Patentansprüche

1. Verfahren zur Montage leitfähiger Stifte in eine Transfervorrichtung, wobei jeder leitfähige Stift (18) aus mindestens einem leitfähigen Segment (19) gebildet ist und dazu bestimmt ist, mit mindestens einem anderen leitfähigen Stift elektrisch verbunden zu werden, um eine elektrische Wicklung (24) eines bewickelten Teils einer elektrischen Drehmaschine (10) zu bilden, wobei die Transfervorrichtung (40) einen Spindelkörper (41), der eine Achse (Z) aufweist, und eine Vielzahl von Führungslamellen (42), die sich von dem Körper radial erstrecken, beinhaltet, wobei Seitenräume (43), die dazu bestimmt sind, mindestens ein leitfähiges Segment aufzunehmen, zwischen zwei benachbarten Führungslamellen definiert sind, wobei die leitfähigen Stifte (18) in eine erste Anordnung von Stiften (80) und eine zweite Anordnung von Stiften (81) aufgeteilt sind, wobei die erste Anordnung von Stiften (80) in eine erste Unteranordnung von Stiften (80a) und eine zweite Unteranordnung von Stiften (80b) unterteilt ist, wobei das Verfahren (120) **dadurch gekennzeichnet ist, dass** es in einem ersten Teilabschnitt (A) mindestens einen Schritt des Zuführens (122), der das Einrichten der Stifte der ersten Anordnung von Stiften (80) in Seitenräumen (43) der Transfervorrichtung (40) beinhaltet; und in einem zweiten Teilabschnitt (B) Folgendes beinhaltet:
- einen Schritt des Anhebens (130), während dessen die Stifte der ersten Unteranordnung (80a) verlagert werden, um einen Einschubraum (82) zwischen der ersten Unteranordnung (80a) und der zweiten Unteranordnung von Stiften (80b) zu erzeugen;
- einen Schritt des Einschiebens (131), während dessen die Stifte der zweiten Anordnung (81) in den Einschubraum (82) eingeschoben werden, sodass die leitfähigen Stifte der zweiten Anordnung (81) in Umfangsrichtung nach den leitfähigen Stiften der zweiten Unteranordnung (80b) ausgerichtet sind;
- einen Schritt des Absenkens (132), während dessen die Stifte der ersten Unteranordnung (80a) verlagert werden, sodass die leitfähigen Stifte der ersten Unteranordnung in Umfangsrichtung nach den leitfähigen Stiften der zweiten Anordnung (81) ausgerichtet sind.

2. Montageverfahren nach dem vorhergehenden Anspruch, wobei nach dem Schritt des Absenkens (132) mindestens ein leitfähiges Segment der leitfähigen Stifte der zweiten Anordnung von Stiften (81) radial zwischen der Achse (Z) und einem der leitfähigen Segmente der leitfähigen Stifte der ersten Unteranordnung (80a) eingerichtet ist.

3. Montageverfahren nach einem der vorhergehenden Ansprüche, wobei nach dem Schritt des Absenkens (132) die leitfähigen Stifte der zweiten Anordnung von Stiften (82) in Umfangsrichtung zwischen den leitfähigen Stiften der ersten Unteranordnung (80a) der ersten Anordnung von Stiften und den leitfähigen Stiften der zweiten Unteranordnung (80b) der ersten Anordnung von Stiften eingerichtet sind.

4. Montageverfahren nach einem der vorhergehenden Ansprüche, wobei während des Schritts des Einschiebens (131) die leitfähigen Stifte der zweiten Anordnung von Stiften (81) mindestens in einer Umfangs- und/oder Axialrichtung zwischen die leitfähigen Stifte der ersten Unteranordnung (80a) von Stiften und die leitfähigen Stifte der zweiten Unteranordnung (80b) von Stiften eingeschoben werden.

5. Montageverfahren nach einem der vorhergehenden Ansprüche, wobei der Schritt des Anhebens (130) und/oder der Schritt des Absenkens (132) eine Verlagerung mindestens eines leitfähigen Segments (19) jedes Stifts (18) der ersten Unteranordnung (80a) in eine Richtung, die in einer zu der Achse (Z) quer verlaufenden Ebene liegt, und/oder in eine Richtung, die in einer die Achse (Z) enthaltenden Ebene liegt, beinhaltet.

6. Montageverfahren nach einem der vorhergehenden Ansprüche, wobei die Bewegung der leitfähigen Stifte der ersten Unteranordnung (80a) während des Schritts des Absenkens (132) und die Bewegung der leitfähigen Stifte (80a) während des Schritts des Anhebens (130) in einer gleichen Richtung, jedoch mit umgekehrten Vorzeichen, erfolgen.

7. Montageverfahren nach einem der vorhergehenden Ansprüche, wobei das Verfahren (120) nach dem Schritt des Absenkens (132) einen Schritt des Herausziehens (133) eines entfernbaren Trägers (48) umfasst, welcher dazu eingerichtet ist, die leitfähigen Stifte der zweiten Anordnung von Stiften (81) während des Schritts des Einschiebens (131) zu tragen.

8. Montageverfahren nach einem der vorhergehenden Ansprüche, wobei das Verfahren (120) nach dem Schritt des Absenkens (132) einen Schritt des Herausziehens (134) eines Hebelträgers (49) umfasst, welcher dazu eingerichtet ist, die leitfähigen Stifte der ersten Unteranordnung von Stiften (80a) während des Schritts des Anhebens (130) und des Absenkens (132) zu tragen.

9. Montageverfahren nach einem der vorhergehenden Ansprüche, wobei das Verfahren (120) einen Schritt des Ausfahrens (135) mindestens einer Führungslamelle (42) umfasst, während dessen die Lamelle zwischen einer Ruhestellung, in der ein Umfangsraum zwischen zwei leitfähigen Segmenten (19) frei bleibt, und einer Haltestellung, in der die Lamelle (42) in Umfangsrichtung zwischen mindestens zwei leitfähigen Segmenten (19) eingerichtet ist, verlagert wird.

10. Montageverfahren nach dem vorhergehenden Anspruch, wobei während des Schritts des Ausfahrens (135) die Führungslamelle (42) eine Bewegung in einer in Bezug auf die Achse (Z) radialen Richtung aufweist.

11. Montageverfahren nach einem der vorhergehenden Ansprüche, wobei die Anzahl an Seitenräumen (43), die die Stifte (18) der ersten Unteranordnung von Stiften (80a) aufnehmen, größer als oder gleich der Anzahl an Seitenräumen (43) ist, die die Stifte (18) der zweiten Anordnung von Stiften (81) aufnehmen.

12. Anordnung zur Montage leitfähiger Stifte, wobei jeder leitfähige Stift (18) aus mindestens einem leitfähigen Segment (19) gebildet ist und dazu bestimmt ist, mit mindestens einem anderen leitfähigen Stift elektrisch verbunden zu werden, um eine elektrische Wicklung (24) eines bewickelten Teils einer elektrischen Drehmaschine zu bilden, wobei die Montageanordnung **dadurch gekennzeichnet ist, dass** sie eine Transfervorrichtung (40) beinhaltet, die einen Spindelkörper (41) und eine Vielzahl von Führungslamellen (42), die sich von dem Körper radial erstrecken, beinhaltet, wobei Seitenräume (43), die dazu bestimmt sind, mindestens ein leitfähiges Segment (19) aufzunehmen, zwischen zwei benachbarten Führungslamellen definiert sind; wobei die Transfervorrichtung (40) dazu eingerichtet ist, das Montageverfahren nach einem der vorhergehenden Ansprüche umzusetzen.

13. Montageanordnung nach Anspruch 12, wobei die Transfervorrichtung (40) einen entfernbaren Träger (48) beinhaltet, der dazu eingerichtet ist, die leitfähigen Stifte der zweiten Anordnung von Stiften (81) während des Schritts des Einschiebens (131) zu tragen.

14. Montageanordnung nach Anspruch 12 oder 13, wobei die Transfervorrichtung (40) einen Hebelträger (49) beinhaltet, der dazu eingerichtet ist, die leitfähigen Stifte der ersten Unteranordnung von Stiften (80a) während des Schritts des Anhebens (123) und des Absenkens (125) zu tragen.

15. Montageanordnung nach einem der Ansprüche 12 bis 14, wobei mindestens eine Führungslamelle (42) zwischen einer Ruhestellung, in der ein Umfangsraum zwischen zwei leitfähigen Segmenten (19) frei bleibt, und einer Haltestellung, in der die Lamelle (42) in Umfangsrichtung zwischen mindestens zwei leitfähigen Segmenten (19) eingerichtet ist, beweglich ist.

## Claims

1. Method for assembling conductive pins in a transfer device, each conductive pin (18) being formed of at least one conductive segment (19) and being intended to be electrically connected to at least one other conductive pin in order to form an electrical winding (24) of a wound part of a rotary electric machine (10), the transfer device (40) comprising a spindle body (41) having an axis (Z) and a plurality of guide strips (42) radially extending from the body, lateral spaces (43) intended to house at least one conductive segment being defined between two adjacent guide strips, the conductive pins (18) are split into a first set (80) of pins and a second set (81) of pins, the first set (80) of pins being divided into a first sub-set (80a) of pins and a second sub-set (80b) of pins, the method (120) being **characterized in that** it comprises, in a first part (A), at least one supply step (122) comprising arranging the pins of the first set (80) of pins in lateral spaces (43) of the transfer device (40); and, in a second part (B):
- a lifting step (130), in which the pins of the first sub-set (80a) are moved so as to create an insertion space (82) between said first sub-set (80a) and the second sub-set (80b) of pins;
- an insertion step (131), in which the pins of the second set (81) are inserted into the insertion space (82) so that the conductive pins of the second set (81) are circumferentially aligned with the conductive pins of the second sub-set (80b);
- a lowering step (132), in which the pins of the first sub-set (80a) are moved so that said conductive pins of said first sub-set are circumferentially aligned with the conductive pins of the second set (81).

2. Assembly method according to the preceding claim, wherein, after the lowering step (132), at least one conductive segment of the conductive pins of the second set (81) of pins is radially arranged between the axis (Z) and one of the conductive segments of the conductive pins of the first sub-set (80a).

3. Assembly method according to either of the preceding claims, wherein, after the lowering step (132), the conductive pins of the second set (82) of pins are circumferentially arranged between the conductive pins of the first sub-set (80a) of the first set of pins and the conductive pins of the second sub-set (80b) of the first set of pins.

4. Assembly method according to one of the preceding claims, wherein, during the insertion step (131), the conductive pins of the second set (81) of pins are inserted at least in a circumferential and/or axial direction between the conductive pins of the first sub-set (80a) of pins and the conductive pins of the second sub-set (80b) of pins.

5. Assembly method according to one of the preceding claims, wherein the lifting step (130) and/or the lowering step (132) comprises moving at least one conductive segment (19) of each pin (18) of the first sub-set (80a) in a direction within a plane transverse to the axis (Z) and/or in a direction within a plane containing the axis (Z).

6. Assembly method according to one of the preceding claims, wherein the movement of the conductive pins of the first sub-set (80a) during the lowering step (132) and the movement of said conductive pins (80a) during the lifting step (130) occur in the same direction in opposite directions to each other.

7. Assembly method according to one of the preceding claims, wherein the method (120) comprises, after the lowering step (132), a step (133) of removing a removable support (48) arranged to bear the conductive pins of the second set (81) of pins during the insertion step (131).

8. Assembly method according to one of the preceding claims, wherein the method (120) comprises, after the lowering step (132), a step (134) of removing a lever support (49) arranged to bear the conductive pins of the first sub-set (80a) of pins during the lifting (130) and lowering (132) steps.

9. Assembly method according to one of the preceding claims, wherein the method (120) comprises a step (135) of expanding at least one guide strip (42), in which step said strip moves between a rest position, in which a circumferential space between two conductive segments (19) is left free, and a retention position, in which said strip (42) is circumferentially arranged between at least two conductive segments (19).

10. Assembly method according to the preceding claim, wherein, during the expansion step (135), the guide strip (42) experiences a movement in a radial direction relative to the axis (Z).

11. Assembly method according to one of the preceding claims, wherein the number of lateral spaces (43) housing the pins (18) of the first sub-set (80a) of pins is greater than or equal to the number of lateral spaces (43) housing the pins (18) of the second set (81) of pins.

12. Assembly for assembling conductive pins, each conductive pin (18) being formed of at least one conductive segment (19) and being intended to be electrically connected to at least one other conductive pin in order to form an electrical winding (24) of a wound part of a rotary electric machine, the assembling assembly being **characterized in that** it comprises a transfer device (40) comprising a spindle body (41) and a plurality of guide strips (42) radially extending from the body, lateral spaces (43) intended to house at least one conductive segment (19) being defined between two adjacent guide strips; the transfer device (40) being arranged to implement the assembly method according to any one of the preceding claims.

13. Assembling assembly according to Claim 12, wherein the transfer device (40) comprises a removable support (48) arranged to bear the conductive pins of the second set (81) of pins during the insertion step (131).

14. Assembling assembly according to Claim 12 or 13, wherein the transfer device (40) comprises a lever support (49) arranged to bear the conductive pins of the first sub-set (80a) of pins during the lifting (123) and lowering (125) steps.

15. Assembling assembly according to one of Claims 12 to 14, wherein at least one guide strip (42) is movable between a rest position, in which a circumferential space between two conductive segments (19) is left free, and a retention position, in which said strip (42) is circumferentially arranged between at least two conductive segments (19).
